# EUROPEAN PATENT SPECIFICATION

(11) **EP 1 574 109 B1**
(45) Date of publication and mention of the grant of the patent: **02.08.2006**
(21) Application number: 03813703.0
(22) Date of filing: 19.12.2003
(51) Int. Cl.: H04Q 11/06

(54) **SWITCHING UNIT AND METHOD FOR A TELECOMMUNICATION NETWORK**
SCHALTEINHEIT UND VERFAHREN F R EINTELEKOMMUNIKATIONSNETZ
UNITE ET PROCEDE DE COMMUTATION POUR UN RESEAU DE TELECOMMUNICATION

(30) Priority: 19.12.2002 DE 10260111
(43) Date of publication of application: 14.09.2005
(73) Proprietor: Marconi Communications GmbH, 71509 Backnang (DE)
(72) Inventor: LÜDERS, Ralf, 71549 Auenwald (DE)
(74) Representative: Collier, Ian Terry
(86) International application number: PCT/IB2003/006420
(87) International publication number: WO 2004/057908

(56) References cited:
- EP-A- 1 154 671
- US-A1- 2001 033 569
- US-B1- 6 304 550

## Description

The present invention relates to a switching unit and a switching method for a telecommunication network. In particular, although not exclusively, the invention concerns a switching unit and method for a time division multiplex telecommunication network operating using Synchronous Digital Hierarchy (SDH).

Telecommunication networks comprise a number of nodes interconnected by transmission paths. The transmission paths may be electrical lines, optical fibres or radio paths.

Switching units are located at the nodes of the telecommunication network for switching information signals of individual connections that arrive by a first transmission path at the node in a multiplexed way to an output transmission path selected according to an intended destination of the information signal. The signal multiplex employed on each transmission path comprises a plurality of channels, each of which is capable of transmitting an information signal, but only part of which, at a given instant under normal operating conditions, is used for transmitting information signals that are actually evaluated at their intended destination. Another part of the channels is kept free in order to be able, in case of a transmission failure in one of the used channels, to switch over the information signal conveyed on this channel instantaneously to the free channel, or it is used for transmitting copies of the information signals, so that at the target, two versions of the information signal arrive, the better of which is evaluated at the destination.

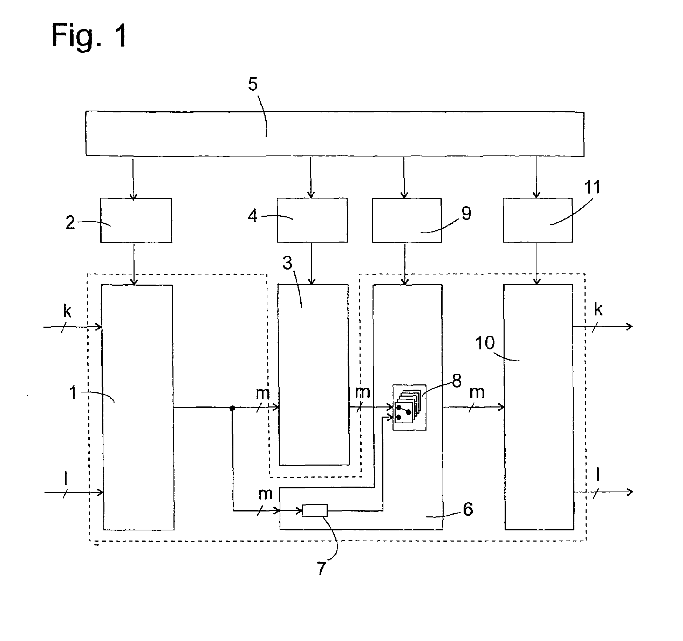

Conventionally, switching units employed in an SDH (Synchronous Digital Hierarchy) telecommunication network have a multiple (three) stage structure as represented in Figure 1. An input stage of the switching unit is formed by a coupling matrix referred to as an MSP-Switch (Multiplex Section Protection-Switch) 1. The MSP-Switch 1 is an m x m space switch having m input ports and m output ports and is capable of connecting any of the m output ports to any of the m input ports. Of the m input ports, k are used for information signals during failure free operation and I are used as backup input ports that are generally used if the other input ports, due to a failure, receive no signal or a signal of bad quality. Each of the normally used k input ports has one of k transmission paths assigned to it, by which the node receives SDH multiplex signals. The MSP-Switch 1 is designed to connect each of its output ports with any of its input ports according to a configuration stored in an associated configuration register 2. At the input and output ports of the MSP-Switch 1, multiplex signals are transmitted which may be formed of data of a plurality of communication connections established between different terminals. The MSP-Switch 1 may feed such a multiplex signal to any of its output ports from any arbitrarily chosen input, but it is not capable of de-composing (de-multiplexing) a multiplex signal received at one of its input ports into components corresponding to connections between different terminals and to insert these components independently from one another into different output multiplex signals. The MSP-Switch thus has only a single, spatial, switching degree of freedom.

A second stage of the switching unit is formed by a coupling matrix referred to as a Virtual Container Switch VCS 3 or TSI-Switch (Time Slot Interchange-Switch), the m input ports of which are connected to a respective one of the m output ports of the MSP-Switch 1. The VCS 3 is designed to decompose a multiplex signal received at one of its input ports into its various components corresponding to various communications and to switch these components to different output ports of the VCS 3. In order to be able to perform such a switching without collision with other multiplex signals simultaneously processed by the VCS 3, the VCS 3 must also be capable of modifying the temporal positions of the individual signal components in the multiplex signals, i.e. the placement of the signal components in the time slots of the multiplex signal. The VCS 3 thus has two switching degrees of freedom for each signal component, a spatial and a temporal one.

The VCS 3 also has a configuration register 4 assigned to it, which specifies for each time slot of each output multiplex signal as which time slot of which input multiplex signal it is received by the VCS 3. If n is the number of time slots in the multiplex, the number of entries in the configuration register 4 is n times greater than that of the number of entries of the configuration register 2, and the storage consumption of each entry is greater, since not only the input port at which the signal component corresponding to the entry is received, but also the time slot of the input multiplex must be specified in which this signal component is contained. Accordingly, a control logic 5 takes more than n times longer for overwriting the content of the configuration register 4 with a new configuration than for overwriting the configuration register 2.

In order to reduce this time and to simplify the work of the control logic 5, a so-called Bypass 6 is provided. The Bypass 6 comprises a bypass path for each output port of the MSP-Switch 1, by which the output multiplex signals appearing at the output ports of the MSP-Switch 1 may circumvent the VCS 3 without any modification of the temporal structure and without any spatial cross-connection. Each bypass path comprises a delay circuit 7, which delays the multiplex signals by the dwelling time of the signals in the VCS 3. The bypass paths and the output ports of the VCS 3 meet again at switches 8 of the Bypass 6 which transmit either a multiplex signal from the delay circuit 7 or the corresponding multiplex signal from the VCS 3 to one of m output ports. The position of the switches 8 is controlled by a Bypass configuration register 9. The configuration register 9 is much smaller than the MSP-Switch configuration register 2. While the latter has to specify an assigned output port for each input port of the MSP-Switch 1, i.e. it must comprise at least m (log₂ m) bits, the Bypass configuration register 9 requires only m bits for specifying the position of each of the switches 8.

The m output ports of the Bypass 6 are further connected to m input ports of a coupling matrix referred to as MSP-Bridge 10, the structure of which corresponds to that of the MSP-Switch 1, i.e. it an m x m pure space switch. The switching state of the MSP-Bridge 10 is controlled by an MSP-Bridge configuration register 11.

The reason for this complicated structure of the switching unit is the necessity to keep the amount of control data traffic between the control logic 5 and the various switching matrices 1, 3, 10 and their respective configuration registers 2, 4, 9, 11 small. Theoretically, it is possible to remove the MSP-Switch 1, Bypass 6 and the MSP-Bridge 11, and to connect the input and output ports of the switching unit directly to the input and output ports of the VCS (TSI-Switch) 3. However, this would require the control data traffic between the control logic 5 and the single remaining TSI configuration register 4 of the VCS 3 to increase to a multiple of the traffic conventionally existing between the control logic 5 and all configuration registers together. If, for example, in the MSP-Switch 1 the connection between two input ports and two output ports is to be cross exchanged (cross-connected), it is sufficient for the switching unit of Figure 1, if the entries corresponding to the concerned input ports in the MSP-Switch configuration register 2 are overwritten. Carrying out a modification having the same effect by the TSI configuration register 4 of the VCS 3 is much more laborious, since a large number of output ports may be concerned at the same time. Furthermore, the greater the increase of data traffic the greater the number m of input ports and output ports of the various matrices and the number n of the components of the signal multiplex.

European patent pubblication EP 1 154 671 discloses a switching unit having a three stages structure, according to the prior art discussed above.

The present invention has arisen in an endeavour to provide a switching unit for a telecommunication network having a control compatible with the conventional switching unit described above and which, at least in part, provides a simplified switching matrix structure without causing, by this simplification, an increase in control data traffic between the control logic and the switching matrix.

According to the present invention there is provided a switching unit for a telecommunication network having a command controlled switching matrix having at least two switching degrees of freedom and a control logic for generating a first type of control commands that determine, for a group of connections, the switching of these in the first degree of freedom, and at least a second type of control commands which define, for a given connection, its switching in all degrees of freedom, the switching unit being characterized by a conversion circuit connected between the control logic and the switching matrix for combining control commands of the first type with control commands of the second type into a control command of the second type. The conversion circuit of the switching unit according to the invention acts as a receiver for all control commands concerning the configuration issued by the control logic, no matter whether these, in a conventional switching unit of the type shown in Figure 1, would have been directed to the MSP-Switch, the VCS, the Bypass or the MSP-Bridge. The amount of data of the control commands sent by the control logic of the switching unit according to the invention to the conversion circuit may thus be kept as small as with the conventional system of Figure 1. Since the conversion circuit may be placed in close proximity to the switching matrix, high data rates for the transmission of control commands between the conversion circuit and the switching matrix may be realized more easily than between the control logic and the conversion circuit. Moreover, since the conversion circuit is capable of processing various types of control commands of the control logic, in particular the control commands sent to the MSP-Switch, the VCS, the Bypass or the MSP-Bridge in the conventional switching unit, conventional control logic may be used in the context of the present invention. This implies that the control program executed by the control logic 5 may be identical to a conventional control program used for a switching unit having the structure shown in Figure 1. In consequence, the switching unit according to the invention is simplified, and costs are saved.

When it is intended to the use the switching unit of the present invention in an Synchronous Digital Hierarchy (SDH) telecommunication system, the first switching degree of freedom will advantageously be a spatial degree of freedom, i.e. the first degree of freedom defines at which physical output port of the switching matrix a given signal component of a time division multiplex signal input at a given signal input port is output. Moreover the second degree of freedom is advantageously a temporal degree of freedom, i.e. it defines the time slot (or time slots) in which a given component of a multiplex input signal appears at the output port of the switching matrix.

Alternatively when another type of multiplex transmission is employed, such as for example frequency multiplex, the second degree of freedom of the switching is advantageously a frequency degree of freedom.

Preferably, the control logic is designed also to provide control commands of a third type, which, for a group of connections, more specifically, for all connections contained in one multiplex signal, allow or prohibit switching the individual connections in the second degree of freedom.

In order to simplify re-use of existing control logic in a switching unit according to the invention, or to simplify upgrading of existing switching units into switching units according to the invention, it is advantageous that each type of control command that may be issued by the control logic has an individual interface of the conversion circuit for receiving these control commands assigned to it, corresponding to the various configuration registers of the conventional switching unit.

In order to be able to transmit a large amount of control commands quickly and efficiently between the conversion circuit and the switching matrix, it is desirable that the switching matrix and the conversion circuit are implemented in a same assembly, for example a common circuit board. The control logic, however, may be implemented in a second assembly, such as on a second circuit board connected to the first circuit board by a bus system. Such a control logic may also be provided for controlling not only the switching matrix, but further components of the switching unit, too.

According to a further aspect of the invention there is provided a switching method for a telecommunication network, comprising the steps of: generating a first type of control commands which, for a group of connections, specifies the switching thereof in a first degree of freedom; generating at least a second type of control commands which, for a given connection, specify the switching thereof in all degrees of freedom; combining the control commands of the first type with control commands of the second type so as to form a control command of the second type; and inputting the control command obtained by combining into a command controlled switching matrix having at least two switching degrees of freedom.

Further features and advantages of the invention will be apparent from the subsequent description of a switching unit in accordance with the invention which will now be described by way of example only with reference to the accompanying drawings in which:
Figure 1, already discussed, is a block diagram of a conventional switching unit for use in an SDH telecommunications network;
Figure 2 is a block diagram of a switching unit in accordance with the invention comprising a switching matrix and other components controlled by a common control logic;
Figure 3 is a block diagram of the switching matrix of Figure 2; and
Figure 4 schematically illustrates the processing in a conversion circuit according to the invention.

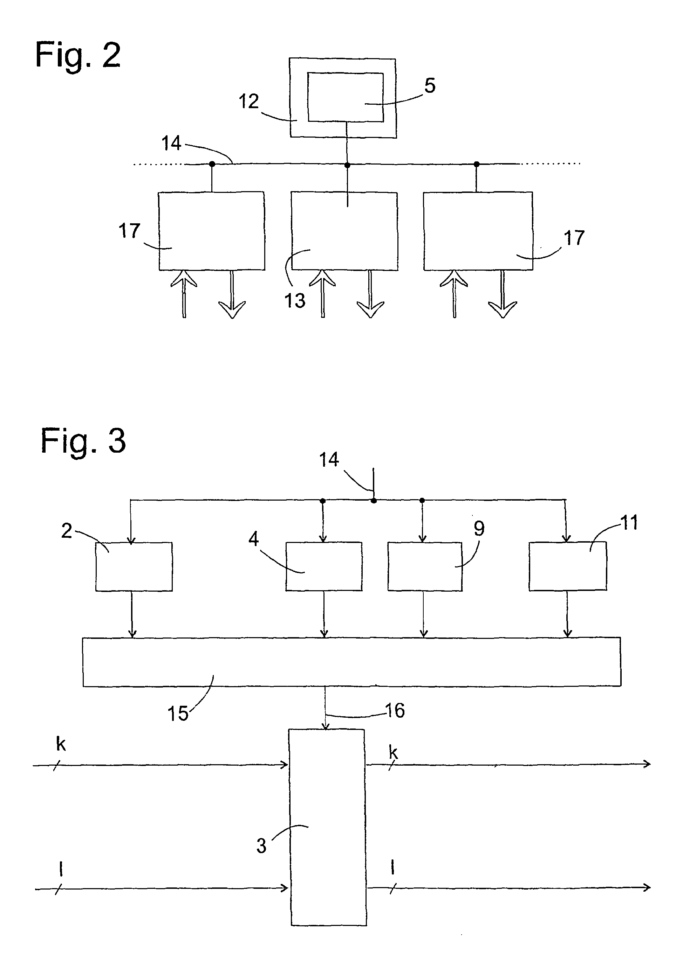

Referring to Figure 2 there is shown a schematic block diagram of a switching unit for a telecommunication network according to the present invention. The switching unit is formed of a plurality of circuit boards 12, 13, 17 that are mounted to a common back plane and communicate using a bus system 14 located on this back plane.

On the circuit board 12, a control logic 5 is formed which, in structure and function, may correspond to the control logic 5 of Figure 1 described above. The control logic 5 is implemented as a micro controller system which receives routing information of the various connections to be led through the switching unit and controls a switching matrix on the circuit board 13.

The circuit boards 17 are so called traffic cards for terminating information signals arriving from outside and converting these into a format which the switching unit is able to process, to detect malfunctions in the information signals, etc.

A block diagram of the configuration of the switching matrix is shown in Figure 3. The switching matrix comprises four configuration registers, which, in function and size, correspond to the configuration registers 2 (MSP-Switch configuration register), 4 (TSI configuration register), 9 (Bypass configuration register) and 11 (MSP-Bridge configuration register) of Figure 1 and are therefore denoted by the same reference numerals and abbreviations. In contrast to the known switching unit of Figure 1, these configuration registers do not directly control switching matrices or switches, but are each connected to a conversion circuit 15, which accedes to the contents of these registers in order to process these into an overall configuration defining the switching state of a single VCS (TSI) 3, the m input and output ports of which immediately form the input and output ports of the switching matrix. This implies that the overall configuration obtained by the conversion circuit 15 specifies for each time slot of the multiplex signal at each output port of the VCS 3 an input port and an input time slot assigned to it. The control data rate between the conversion circuit 15 and the VCS 3 which is necessary to keep the configuration of the VCS 3 up to date is generally higher than the data rate sent by the control logic 5 to the conversion circuit 15, but this requirement may easily be fulfilled, since the conversion circuit 15 and the VCS 3 are on the same circuit board 13, so that the control data line 16 between the two is short and may be operated at a high rate. Moreover, the control data line 16 is available exclusively for the communication between the conversion circuit 15 and the VCS 3, whereas, eventually, several circuit boards 13, 17 may have to be provided with control information specific to each of them.

In contrast to the control logic 5, which may be realized by a microprocessor or micro controller and a corresponding control program, a hard wired logic is preferred for the conversion circuit 15 in order to achieve highest possible processing speeds.

The processing to be carried out by the conversion circuit 15 is not very complicated, it merely requires a lot of calculation under strict temporal constraints, because for converting a modified MSP (Multiplex Section Protection) switch configuration, VCS configuration, Bypass configuration or MSP-Bridge configuration provided by the control logic 5 to the conversion circuit 15 into an overall configuration for the VCS 3, less than 50 ms are available.

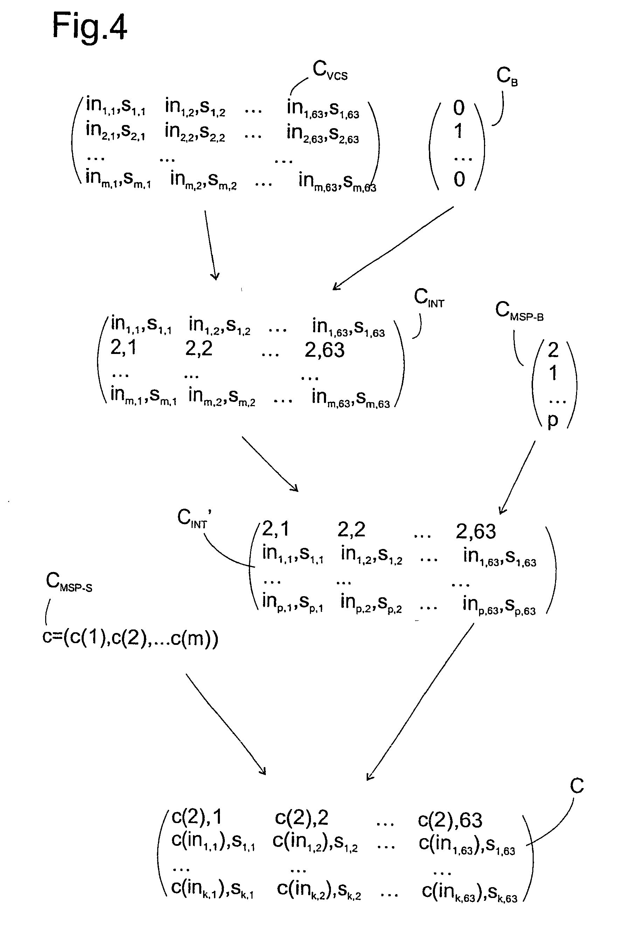

If m = k + 1 is the number of input ports (and output ports) of the switching unit, and each frame, according to the SDH standard, has n = 63 channels to be switched independently from one another, an MSP-Switch configuration (referred to as C_{MSP-S} in Figure 4) may be regarded as an m-component vector, the components of which are each selected from among the integers 1 to m, wherein the i-th component of the vector indicates the number of the input port of the MSP-Switch which is connected to the i-th output port; a VCS configuration (referred to as C_{VCS} in Fig. 4) may be regarded as a matrix having m rows and n = 63 columns, the elements which are pairs of integers, wherein the element in row i, column j specifies the number in_{i,j} of the input port and the number s_{i,j} of the time slot at this input port, in which an information signal output in the j-th time slot of the i-th output port of the VCS is received. The m bits of the Bypass configuration C_{B} specify which of the m input ports of the VCS are directly switched through to the correspondingly numbered output port thereby circumventing the VCS and avoiding the need to shuffle time slots within the multiplex signal of the corresponding input. The structure and function of the MSP-Bridge configuration C_{MSP-B} are analogous to the MSP-Switch configuration C_{MSP-S}.

In the vectors C_{MSP-S}, C_{MSP-B} and the matrix C_{VCS}, there may be components which comprise identical numbers or pairs of numbers, respectively; this corresponds to switching a signal multiplex or a signal component, respectively, from one input port to several output ports.

In order to calculate an overall configuration for the VCS 3 of the switching unit according to the invention from these four configurations, the conversion circuit 15 first combines the VCS configuration C_{VCS} and the Bypass configuration C_{B}, as shown in Figure 4, by overwriting in each line i of the matrix C_{VCS}, for which a bit with a value of one in the Bypass configuration C_{B} indicates that a bypass is to be switched (the second line in the example of Figure 4), the elements of that line by pairs of numbers i, j, in which j is the number of the column in which the concerned element is located in the configuration matrix C_{VCS}. The thus modified line corresponds, in a switching unit having the conventional design shown in Figure 1, to directly switching the multiplex signal from input port i = 2 to the output port i = 2 of the VCS 3 while maintaining its temporal structure.

The thus obtained intermediate matrix C_{INT} must still be combined with the configurations C_{MSP-S} of the MSP-Switch and C_{MSP-B} of the MSP-Bridge to form the overall configuration. The order in which this is done is arbitrary. The MSP-Bridge configuration C_{MSP-B} is an m-component vector, the i-th component of which specifies the number of the input port of the MSP-Bridge which is connected to its i-th output port. This implies: if, as in the example of Figure 4, the first component of C_{MSP-B} is 2, the second is 1 and the m-th one is p, the first output port has the signal multiplex defined by the components of the second line of C_{INT} forwarded to it, the second output port has the signal multiplex of the first line and the m-th output has that of the p-th line forwarded to it. This is reflected in the structure of the matrix C_{INT}' of Figure 4 obtained by combining C_{INT} and C_{MSP-B}.

The MSP-Switch configuration C_{MSP-S} is an m-component vector, the i-th component cᵢ of which, in the conventional design of Figure 1, specifies the number of the input port of the MSP-Switch that is connected to its i-th output port. By combining this vector with C_{INT}', the overall configuration C is obtained as shown in Figure 4, by which the conversion circuit 15 controls the VCS 3 of the switching unit of the invention.

It will be readily appreciated by those skilled in the art that the switching unit and method of the present invention can be modified depending on the intended application. For example whilst the switching unit of the invention has been described with reference to an SDH telecommunications network where it finds particular application, the switching unit and method of the invention can be applied to other telecommunication networks operating with different multiplexing schemes such as for example frequency multiplex networks.

## Claims

1. A switching unit for a telecommunication network having a command controlled switching matrix (3) having at least two switching degrees of freedom, said switching matrix having a control logic (5) for generating a first type of control commands (C_{MPS-S}, C_{MSP-B}) that determine, for a group of connections, the switching of these in the first degree of freedom, and at least a second type of control commands (C_{VCS}) which define, for a given connection, its switching in all degrees of freedom, **characterized by** a conversion circuit (15) connected between the control logic (5) and the switching matrix (3) for combining the control commands of the first type with the control commands of the second type into a control command of the second type (C).

2. A switching unit according to claim 1, **characterized in that** the first switching degree of freedom is a spatial degree of freedom.

3. A switching unit according to claim 1 or 2, **characterized in that** the second switching degree of freedom is a temporal degree of freedom.

4. A switching unit according to claim 1 or 2, **characterized in that** the second switching degree of freedom is a frequency degree of freedom.

5. A switching unit according to one of the preceding claims, **characterized in that** the control logic (5) is further adapted to generate control commands of a third type (C_{B}) which, for a group of connections, allow or prohibit switching the individual connections of said group in the second degree of freedom.

6. A switching unit according to one of the preceding claims, **characterized in that** each of said type of control command (C_{MPS-S}, C_{VCS}, C_{B}, C_{MSP-B}) has an interface of its own of the conversion circuit (15) assigned to it for receiving these control commands.

7. A switching unit according to one of the preceding claims, **characterized in that** the conversion circuit (15) and the switching matrix (3) are implemented in a same assembly (13).

8. A switching unit according to claim 7, **characterized in that** the control logic (5) is implemented in a second assembly (12).

9. A switching unit according to claim 8, **characterized in that** the control logic (5) is adapted to control a plurality of assemblies (13, 17).

10. A switching unit according to one of the preceding claims, **characterized in that** said unit is adapted to switch virtual containers in an SDH telecommunication network.

11. Switching method for a telecommunication network, comprising the steps of: generating a first type of control commands (C_{MPS-S}, C_{MSP-B}) which, for a group of connections, specify the switching thereof in a first degree of freedom; generating at least a second type of control commands (C_{VCS}) which, for a given connection, specify the switching thereof in all degrees of freedom; combining the control commands of the first type with control commands of the second type so as to form a control command of the second type (c), and inputting the control command, obtained by said combining, into a command controlled switching matrix (3) having at least two switching degrees of freedom.

## Patentansprüche

1. Vermittlungseinheit für ein Telekommunikationsnetzwerk, welches eine befehlsgesteuerte Vermittlungsmatrix (3) hat, welche zumindest zwei Vermittlungs-Freiheitsgrade hat, wobei die Vermittlungsmatrix eine Steuerlogik (5) zum Erzeugen eines ersten Typs von Steuerbefehlen (C_{MPS-S}, C_{MSP-B}), welche für eine Gruppe von Verbindungen die Vermittlung dieser im ersten Freiheitsgrad bestimmen, und zumindest eines zweiten Typs von Steuerbefehlen (C_{VCS}), welche bei einer gegebenen Verbindung ihre Vermittlung in allen Freiheitsgraden bestimmen, hat, **gekennzeichnet durch** eine Umformungsschaltung (15), welche zwischen der Steuerlogik (5) und der Vermittlungsmatrix (3) verbunden ist, um die Steuerbefehle des ersten Typs mit den Steuerbefehlen des zweiten Typs zu einem Steuerbefehl des zweiten Typs (C) zusammenzuführen.

2. Vermittlungseinheit nach Anspruch 1, **dadurch gekennzeichnet, dass** der erste Vermittlungs-Freiheitsgrad ein räumlicher Freiheitsgrad ist.

3. Vermittlungseinheit nach Anspruch 1 oder 2, **dadurch gekennzeichnet, dass** der zweite Vermittlungs-Freiheitsgrad ein zeitlicher Freiheitsgrad ist.

4. Vermittlungseinheit nach Anspruch 1 oder 2, **dadurch gekennzeichnet, dass** der zweite Vermittlungs-Freiheitsgrad ein Frequenz-Freiheitsgrad ist.

5. Vermittlungseinheit nach einem der vorhergehenden Ansprüche, **dadurch gekennzeichnet, dass** die Steuerlogik (5) ferner dazu angepasst ist, Steuerbefehle eines dritten Typs (C_{B}) zu erzeugen, welche bei einer Gruppe von Verbindungen eine Vermittlung der einzelnen Verbindungen dieser Gruppe im zweiten Freiheitsgrad erlauben oder unterdrücken.

6. Vermittlungseinheit nach einem der vorhergehenden Ansprüche, **dadurch gekennzeichnet, dass** jeder aus dem Typ von Steuerbefehlen (C_{MPS-S}, C_{VCS}, C_{B}, C_{MSP-B}) eine eigene Schnittstelle der Umformungsschaltung (15) hat, welche ihr zugewiesen ist, um diese Steuerbefehle zu empfangen.

7. Vermittlungseinheit nach einem der vorhergehenden Ansprüche, **dadurch gekennzeichnet, dass** die Umformungsschaltung (15) und die Vermittlungsmatrix (3) in einer selben Anordnung (13) implementiert sind.

8. Vermittlungseinheit nach Anspruch 7, **dadurch gekennzeichnet, dass** die Steuerlogik (5) in einer zweiten Anordnung (12) implementiert ist.

9. Vermittlungseinheit nach Anspruch 8, **dadurch gekennzeichnet, dass** die Steuerlogik (5) dazu angepasst ist, eine Mehrzahl von Anordnungen (13, 17) zu steuern.

10. Vermittlungseinheit nach einem der vorhergehenden Ansprüche, **dadurch gekennzeichnet, dass** die Einheit dazu angepasst ist, virtuelle Container in einem SDH Telekommunikationsnetzwerk zu vermitteln.

11. Vermittlungsverfahren für ein Telekommunikationsnetzwerk, welches die Schritte enthält:
Erzeugen eines ersten Typs von Steuerbefehlen (C_{MPS-S}, C_{MSP-B}), welche für eine Gruppe von Verbindungen die Vermittlung derer in einem ersten Freiheitsgrad spezifizieren; Erzeugen von zumindest einem zweiten Typ von Steuerbefehlen (C_{VCS}), welche bei einer gegebenen Verbindung die Vermittlung derer in allen Freiheitsgraden spezifizieren; Zusammenführen der Steuerbefehle des ersten Typs mit Steuerbefehlen des zweiten Typs, um einen Steuerbefehl des zweiten Typs (C) auszubilden; und Eingeben des Steuerbefehls, welcher durch das Zusammenführen erlangt wird, in eine befehlsgesteuerte Vermittlungsmatrix (3), welche zumindest zwei Vermittlungs-Freiheitsgrade hat.

## Revendications

1. Unité de commutation pour un réseau de télécommunication comportant une matrice de commutation commandée par des instructions (3), ayant au moins deux marges de manoeuvre de commutation, ladite matrice de commutation comportant une logique de commande (5) permettant de générer un premier type d'instructions de commande (C_{MPS-S}, C_{MSP-B}) qui déterminent, pour un groupe de connexions, leur commutation selon la première marge de manoeuvre, et au moins un deuxième type d'instructions de commande (C_{VCS}) qui définissent, pour une connexion donnée, sa commutation selon l'ensemble des marges de manoeuvre, **caractérisée par** un circuit convertisseur (15) connecté entre la logique de commande (5) et la matrice de commutation (3) afin de combiner les instructions de commande du premier type et les instructions de commande du deuxième type et d'obtenir une instruction de commande du deuxième type (C).

2. Unité de commutation selon la revendication 1, **caractérisée en ce que** la première marge de manoeuvre de commutation est une marge de manoeuvre spatiale.

3. Unité de commutation selon l'une quelconque des revendications 1 ou 2, **caractérisée en ce que** la deuxième marge de manoeuvre de commutation est une marge de manoeuvre temporelle.

4. Unité de commutation selon l'une quelconque des revendications 1 ou 2, **caractérisée en ce que** la deuxième marge de manoeuvre de commutation est une marge de manoeuvre de fréquence.

5. Unité de commutation selon l'une quelconque des revendications précédentes, **caractérisée en ce que** la logique de commande (5) est en outre conçue afin de générer des instructions de commande d'un troisième type (C_{B}) qui, pour un groupe de connexions, permettent ou empêchent la commutation des connexions individuelles dudit groupe selon la deuxième marge de manoeuvre.

6. Unité de commutation selon l'une quelconque des revendications précédentes, **caractérisée en ce que** chacun desdits types d'instructions de commande (C_{MPS-S}, C_{VCS}, C_{B}, C_{MSP-B}) comporte une interface de son propre circuit convertisseur (15) qui lui est affecté afin de recevoir ces instructions de commande.

7. Unité de commutation selon l'une quelconque des revendications précédentes, **caractérisée en ce que** le circuit convertisseur (15) et la matrice de commutation (3) sont mis en oeuvre dans un même ensemble (13).

8. Unité de commutation selon la revendication 7, **caractérisée en ce que** la logique de commande (5) est mise en oeuvre dans un deuxième ensemble (12).

9. Unité de commutation selon la revendication 8, **caractérisée en ce que** la logique de commande (5) est conçue afin de commander une pluralité d'ensembles (13, 17).

10. Unité de commutation selon l'une quelconque des revendications précédentes, **caractérisée en ce que** ladite unité est conçue afin de commuter des conteneurs virtuels dans un réseau de télécommunication SDH.

11. Procédé de commutation pour un réseau de télécommunication, comprenant les étapes consistant à :
générer un premier type d'instructions de commande (C_{MPS-S}, C_{MSP-B}) qui, pour un groupe de connexions, spécifient leur commutation selon une première marge de manoeuvre ; générer au moins un deuxième type d'instructions de commande (Cvcs) qui, pour une connexion donnée, spécifient leur commutation selon l'ensemble des marges de manoeuvre ; combiner les instructions de commande du premier type aux instructions de commande du deuxième type de manière à former une instruction de commande du deuxième type ; et entrer l'instruction de commande obtenue par ladite combinaison, en une matrice de commutation commandée par des instructions (3) ayant au moins deux marges de manoeuvre de commutation.
